Europäisches Patentamt

European Patent Office

Office européen des brevets

(19)

(11) Numéro de publication: **0 469 998 B1**

(12) **FASCICULE DE BREVET EUROPEEN**

(45) Date de publication du fascicule du brevet: **20.09.95**  (51) Int. Cl.6: **C12G 1/02**, C12N 1/38

(21) Numéro de dépôt: **91402156.3**

(22) Date de dépôt: **31.07.91**

(54) **Procédé de contrôle automatique de la fermentation dans les moûts de raisin.**

(30) Priorité: **03.08.90 FR 9009995**

(43) Date de publication de la demande:
**05.02.92 Bulletin 92/06**

(45) Mention de la délivrance du brevet:
**20.09.95 Bulletin 95/38**

(84) Etats contractants désignés:
**CH DE ES IT LI**

(56) Documents cités:
**EP-A- 196 061**
**EP-A- 271 380**
**US-A- 4 064 015**

**APPLIED ENVIRONMENTAL MICROBIOLOGY,
vol. 55, no. 4, 04 avril 1988, Washington, DC
(US); J.M. SALMON et al., pp. 953-958/**

**BIOFUTUR, vol. 40, no. 72, octobre 1988, Paris (FR); P. BARRE, pp. 22-26/**

(73) Titulaire: **INSTITUT NATIONAL DE LA RECHER-
CHE AGRONOMIOUE (INRA)
147, Rue de l'Université
F-75007 Paris Cédex 07 (FR)**

(72) Inventeur: **Sablayrolles, Jean-Marie
Lotissement "Les Villageoises de Bagnères"
92, rue Tatius,
F-34070 Montpellier (FR)**
Inventeur: **Bely, Marina
Les Rainettes - Bat. C.,
1250 Avenue Las Sorbès
F-34080 Montpellier (FR)**
Inventeur: **Barre, Pierre
90, rue des Lavandes
F-34980 Saint Gely du Fesc (FR)**

(74) Mandataire: **Phélip, Bruno et al
c/o Cabinet Harlé & Phélip
21, rue de La Rochefoucauld
F-75009 Paris (FR)**

## Description

L'invention est relative à un procédé de contrôle automatique de la fermentation dans les moûts de raisin.

En oenologie, la fermentation alcoolique est un processus complexe impliquant divers mécanismes. Des travaux ont été réalisés sur les effets de différents paramètres sur la fermentation, notamment la température, la concentration en éthanol, l'oxygène, les inhibiteurs et les agents nutritifs.

Parmi ces paramètres, on a quelquefois indiqué que l'azote était l'un des facteurs principaux limitant la croissance des micro-organismes et la réduction en sucre.

Ainsi, l'article de A. TROMP paru dans la revue S. Afric. J. Enol. Vitic., 5 (1), 1984, parle bien des difficultés de fermentation liées à une carence d'azote dans le cas des moûts de raisin. Il confirme la relation entre la présence de bourbes et l'addition d'azote ainsi que son influence sur la durée totale de fermentation. Cet article mentionne également que la qualité du vin est améliorée par l'addition d'azote et réduite par la présence de bourbes. En conclusion, cet article oriente les recherches futures sur la sélection de nouvelles souches ainsi que sur la détermination des constituants des bourbes qui influencent de façon notable à la fois la vitesse de fermentation et la qualité du vin.

Des travaux ont montré que certaines fermentations lentes semblent être dues à des taux insuffisants en azote. Plusieurs auteurs ont indiqué que la durée nécessaire pour l'achèvement de la fermentation pourrait être réduite de façon significative par l'addition d'azote assimilable.

Ainsi, l'article de INGELDEW et KUNKEE paru dans la revue Am. J. Enol. Vitic., Vol. 36, n°1, 1985, rapporte des travaux montrant que la fermentation du jus de raisin peut être accélérée par l'addition de composés azotés assimilables.

D'autres auteurs ont montré qu'une telle addition abaissait la formation d'hydrogénosulfite et augmentait par conséquent la qualité du vin.

Récemment, des auteurs ont réalisé des études physiologiques et observé l'inactivation de systèmes de transport de glucose due à un arrêt de synthèse des protéines.

Tous ces travaux ont démontré l'importance de l'azote mais peu ont étudié son effet sur la cinétique.

A cet égard, on peut citer l'article de M.C. BEZENGER et J.M. NAVARRO paru dans la revue Science des Aliments, n° 7, 1987, pages 41 à 60, qui mentionne que l'enrichissement d'un moût naturellement pauvre en azote apparaît comme un moyen d'augmenter la fiabilité de la fermentation alcoolique, en améliorant la teneur en azote des levures et en conséquence la cinétique de la réaction. Cet article mentionne surtout l'avantage de réaliser une plus forte concentration initiale en azote de façon à améliorer la croissance lévurienne, tant quantitativement que d'un point de vue cinétique.

Ainsi, si de nombreux travaux ont montré l'importance de l'azote, aucun d'eux n'a utilisé cette grandeur afin de suivre et contrôler la fermentation.

Le procédé selon l'invention utilise la mise en évidence d'une relation entre la teneur du moût en azote assimilable et la vitesse maximale de fermentation, la vitesse de fermentation étant exprimée en terme de dégagement de $CO_2$ par unité de temps et par unité de volume et il met à profit l'effet d'une addition d'azote pour contrôler la fermentation.

Le procédé selon l'invention se propose, par le suivi en temps réel de la cinétique fermentaire, de détecter les moûts pauvres en azote assimilable par les levures et qui présentent donc des risques importants quant à la fiabilité de la fermentation afin de corriger la teneur en azote.

La détection doit intervenir suffisamment tôt pour permettre une correction efficace.

L'invention concerne un procédé de contrôle automatique de la fermentation dans un moût de raisins, caractérisé en ce qu'il consiste à :
- mesurer de façon permanente la vitesse de fermentation et déterminer sa valeur maximale,
- déterminer une valeur limite de la vitesse maximale de fermentation,
- effectuer, lorsque la vitesse maximale de fermentation est inférieure à ladite valeur limite, et avant la fin de la première moitié de la réaction de fermentation, une addition d'une substance azotée assimilable.

De façon préférée, la vitesse de fermentation est mesurée par la quantité de gaz carbonique dégagée par unité de temps et par unité de volume et ainsi, la vitesse maximale de fermentation est mesurée par la quantité maximale de gaz carbonique dégagée par unité de temps et par unité de volume.

Ainsi, la valeur limite de la vitesse maximale de fermentation correspond à une valeur seuil de la quantité maximum de gaz carbonique dégagée par unité de temps et par unité de volume.

Les études qui seront détaillées plus loin, ont permis de fixer à titre indicatif la valeur seuil à environ 1,3 g/l/h à 24°C correspondant à une concentration initiale en azote assimilable dudit moût voisine de 150 mg/l.

De préférence, l'addition d'une substance azotée assimilable est effectuée à un moment proche de la fin de la première moitié de la fermentation.

La substance azotée assimilable qui est ajoutée est notamment un sel d'ammonium, par exemple le sulfate et/ou le phosphate d'ammonium.

L'invention sera mieux comprise et d'autres buts, avantages et caractéristiques de celle-ci apparaîtront plus clairement à la lecture de la description non limitative suivante d'un procédé de contrôle automatique de la fermentation des moûts de raison, en référence aux dessins annexés sur lesquels :

La Figure 1 représente la méthode de détermination de la durée de fermentation à partir de la courbe de vitesse de production de $CO_2$.

La Figure 2 représente la correction de la durée de fermentation pour une température de 24°C, tmax désignant la durée de fermentation, $tmax_{90}$ désignant la durée de fermentation corrigée pour un dégagement de $CO_2$ de 90 g/l et $CO_2$ max le dégagement maximum de $CO_2$.

La Figure 3 représente la variation de la concentration d'azote assimilable avant fermentation (N) parmi les 40 moûts avec la légende suivante :
- azote ammoniacal (■)
- azote alpha aminé (□)

La Figure 4 représente, pour une température de 24°C, une relation entre la durée de fermentation (corrigée pour un dégagement de $CO_2$ de 90 g/l : $tmax_{90}$) et la concentration d'azote assimilable avant fermentation (N) avec la légende suivante :
- milieu synthétique (●)
- moûts (o)

La Figure 5 représente, pour une température de 24°C, une relation entre la vitesse maximale de production de $CO_2$ [$(dCO_2/dt)max$] et la concentration d'azote assimilable initiale ou avant fermentation (N) avec la légende suivante :
- milieu synthétique (●)
- moûts (o)

La Figure 6 représente la relation entre la population maximale des cellules (Xmax) et la teneur d'azote assimilable avant fermentation (N) pour une température de 24°C.

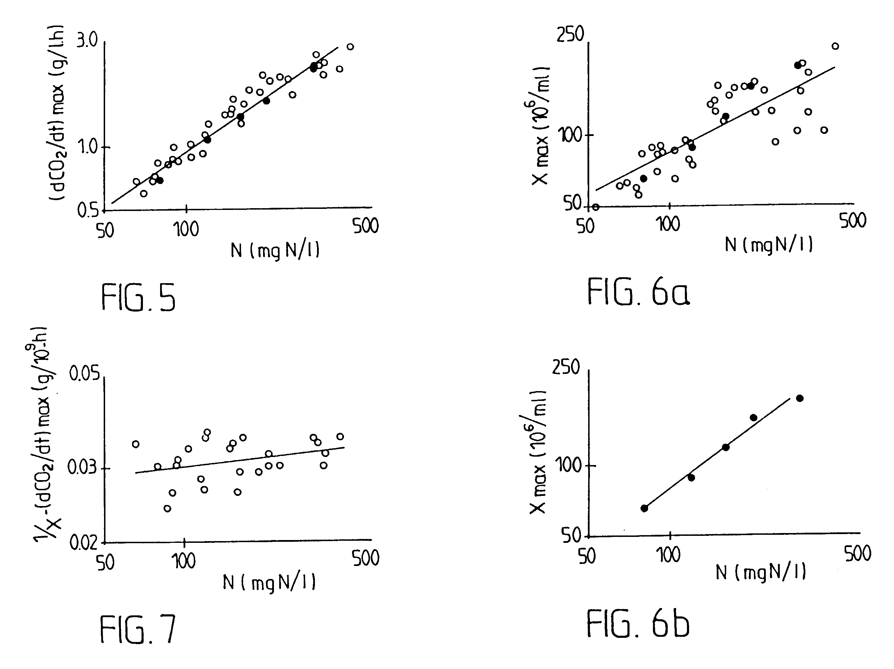

La Figure 6 comprend les Figures 6a et 6b avec, pour la Figure 6a, la légende suivante :
- moûts (o)
- milieu synthétique (●)
  et pour la Figure 6b :
- milieu synthétique (●)

La Figure 7 représente l'effet de la concentration d'azote avant fermentation (N) sur la vitesse maximale de production spécifique de $CO_2$ [$1/x(dCO_2/dt)max$] pour une température de 24°C, les moûts étant représentés par (o).

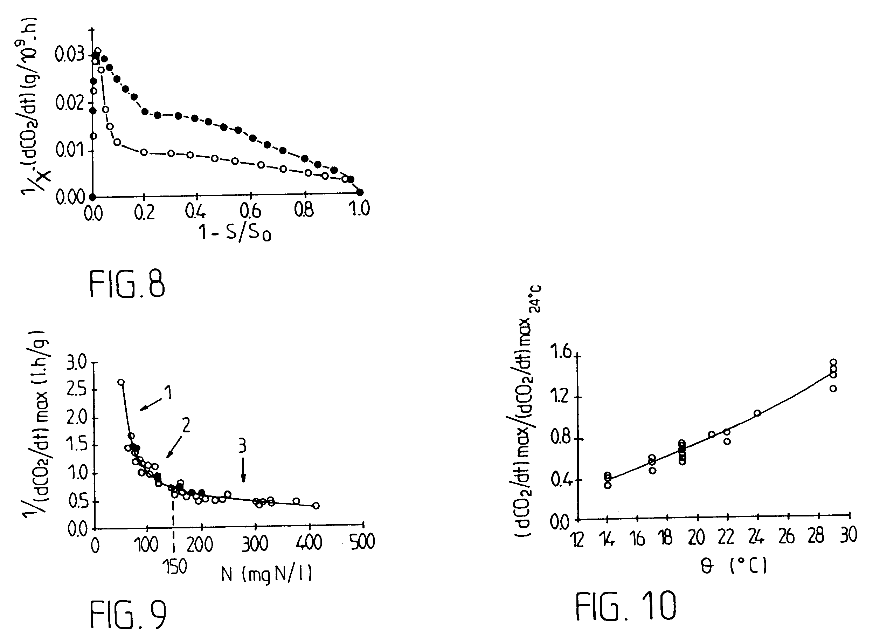

La Figure 8 représente l'évolution de la vitesse de production spécifique de $CO_2$ [$1/x(dCO_2/dt)$] pendant le déroulement de la fermentation (1 - S/So) avec la légende suivante :

(o-o) Moût n°11 (concentration initiale d'azote de 94 mgN/l).

(●-●) Moût n°36 (concentration initiale d'azote de 327 mgN/l).

La Figure 9 représente l'effet de la concentration d'azote assimilable avant fermentation (N) sur $1/(dCO_2/dt)max$, pour une température de 24°C avec la légende suivante :
- moût (o)
- milieu synthétique (●)

La Figure 10 représente la relation entre la vitesse maximale de production de $CO_2$ [$(dCO_2/dt)max$] et la température ($\theta$), $(dCO_2/dt)max_{24°C}$ correspondant à la vitesse maximale de production de $CO_2$ à 24°C.

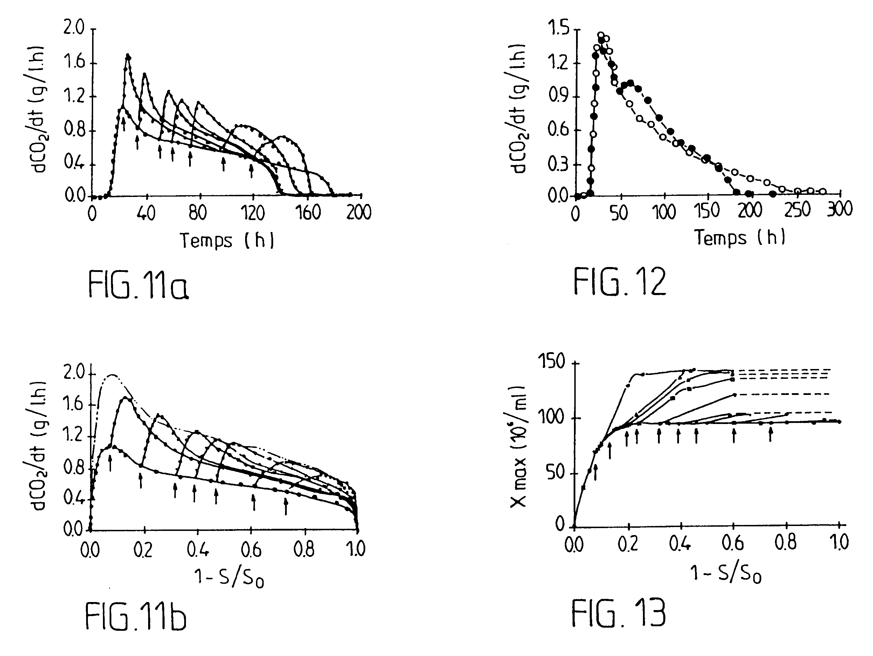

La Figure 11 représente l'effet d'une addition de phosphate d'ammonium (0,3 g/l) pour un milieu synthétique (concentration initiale d'azote de 120 mg N/l) et une température de 24°C.

Fermentation témoin (pas d'addition) : (■).

La flèche noire indique l'instant de l'addition.

La Figure 11 comprend les Figures 11a et 11 b, la Figure 11a représentant l'évolution des vitesses de fermentation en fonction du temps ; et

La Figure 11b représentant l'évolution des vitesses de fermentation en fonction du déroulement de la fermentation avec la légende :

— -- — -- —: vitesse de production de $CO_2$ de la fermentation témoin multipliée par un facteur de 1,85.

La Figure 12 montre l'effet d'une addition de phosphate d'ammonium (0,3 g/l) sur la vitesse à la fin de la fermentation pour une température de 24°C et le Moût n°22 (concentration initiale en azote de 158 mg N/l).

Fermentation témoin (pas d'addition) (o).

Fermentation avec addition (●).

La Figure 13 illustre l'effet d'une addition de phosphate d'ammonium (0,3 g/l) sur la croissance des cellules pour une température de 24°C.

Fermentation témoin (pas d'addition) (■).

Les flèches noires indiquent l'instant de l'addition.

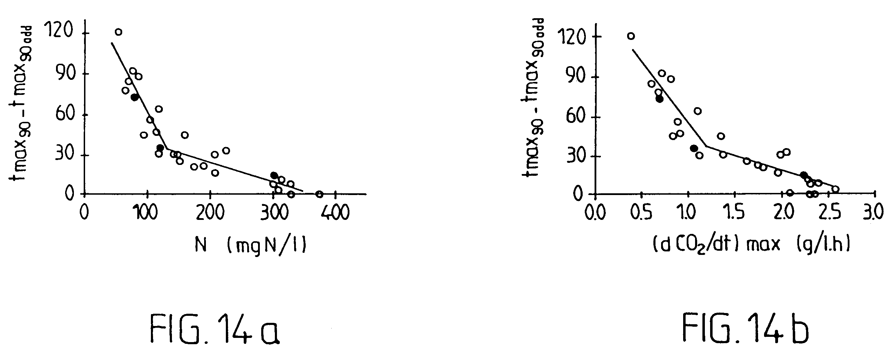

La Figure 14 montre l'effet d'une addition de phosphate d'ammonium (0,3 g/l) sur le gain de temps de fermentation (tmax$_{90}$-tmax$_{90add}$), tmax$_{90}$ correspondant à la durée de fermentation corrigée du témoin et tmax$_{90add}$ correspondant à la durée de fermentation corrigée après addition d'azote, avec la légende suivante :

- milieu synthétique (●)
- moûts (o)

La Figure 14 comprend les Figures 14a et 14b, la Figure 14a représentant le gain de temps en fonction de la concentration d'azote assimilable initiale (avant fermentation), et la Figure 14b représentant le gain de temps en fonction de la vitesse maximale de production de $CO_2$ de la fermentation témoin.

La détection analytique des carences en azote, cuve par cuve, préalablement au commencement de la fermentation, n'est pas concevable dans la grande majorité des situations oenologiques. Par contre, il est possible de suivre la fermentation automatiquement et avec une grande précision grâce notamment au procédé de prévision et de contrôle *in situ* des fermentations alcooliques ainsi qu'au dispositif pour la mise en oeuvre de ce procédé tels que décrits dans la demande de brevet EP-027 1380, au nom de la demanderesse. Selon ce procédé, on mesure, à intervalles de temps donnés, au moins un paramètre choisi parmi la densité du milieu de fermentation, l'indice de réfraction du milieu, le volume de gaz carbonique produit par ce milieu et la perte de poids du milieu de fermentation, ces paramètres étant corrélatifs entre eux, ce qui permet, à partir de la mesure de l'un d'entre eux, de déterminer les concentrations en éthanol et en sucre résiduels, concentrations à partir desquelles on peut déterminer l'avance et l'évolution de la fermentation alcoolique, diagnostiquer les évolutions incorrectes (arrêt ou accident de fermentation) et contrôler cette dernière de façon à corriger toute évolution incorrecte du déroulement de la fermentation.

En utilisant un tel dispositif, on a testé dans des conditions standards, un grand nombre de moûts pour déterminer l'effet de la teneur en azote sur le comportement cinétique de la fermentation et proposer un moyen de détection automatique des carences en azote.

Les matériels et méthodes utilisés pour déterminer l'effet de la teneur en azote sur le comportement cinétique de la fermentation vont maintenant être décrits.

Les conditions de culture vont tout d'abord être examinées.

En ce qui concerne le moût, on a utilisé 40 moûts correspondant à :

- 25 variétés de diverses régions françaises comme la Champagne, les Côtes du Rhône, l'Alsace, le Languedoc Roussillon,
- différentes techniques de préfermentation telles que la clarification, la centrifugation, la microfiltration tangentielle, l'enzymage et le sulfitage.

La concentration initiale de sucre se situait dans la gamme de 160 à 240 g/l. Ces jus sont conservés à -25°C. On a vérifié que la congélation n'avait pas d'effet sur la cinétique de fermentation.

Le milieu synthétique ou milieu de culture, de pH 3,3, a simulé un jus de raisin standard. Il contenait les ingrédients ci-après (exprimés en litre : glucose 200 g, acide citrique 6 g, acide D-L malique (6 g) ; sels minéraux (mg) : $KH_2PO_4$ 750, $KH_2PO_4$ 500, $MgSO_4$-$7H_2O$ 250, $CaCl_2$-$2H_2O$ 155, NaCl 200, $MnSO_4$-$H_2O$ 4, $ZnSO_4$ 4, $CuSO_4$-$5H_2O$ 1, KI 1, $CoCl_2$-$6H_2O$ 0,4, $H_3BO_3$ 1, $(NH_4)_6Mo_7O_{24}$ 1 ; vitamines (mg) : Myo-inositol 20, acide nicotinique 2, panthoténate de calcium 1,5, chlorhydrate de thiamine 0,25, chlorhydrate de pyridoxine 0,25, biotine 0,003 ; facteur de croissance anaérobie : ergostérol 15 mg, oléate de sodium 5 mg, Tween 80 0,5 ml ; source d'azote : 95-360 mgN/L exprimé en % poids/poids azote ammonical ($NH_4Cl$) 18,6 et amino acides : L.Proline 20,5, L.Glutamine 16,9, L.Arginine 12,5, L.Trytophane 6, L.Alanine 4,9, L.Acide glutamique 4, L.Serine 2,6, L.Thréonine 2,6, L.Leucine 1,6, acide L.Aspartique 1,5, L.Valine 1,5, L.phénylalanine 1,3, L.Isoleucine 1,1, L.Histidine 1,1, L.Méthionine 1,1, L.Tyrosine 0,6, L.Glycine 0,6, L.Lysine 0,6, L.Cystéine 0,4.

En ce qui concerne la souche de microorganisme, le microorganisme utilisé était Saccharomyces cerevisia K1 ICV-INRA. Les dispositifs de fermentation ont été inoculés avec $10^6$ cellules/ml qui avaient été développées au préalable à 28°C pendant 24 heures dans le milieu synthétique précité.

On a utilisé des appareils de fermentation de petites dimensions (1,2 l). Les conditions de remplissage ont été contrôlées. On a mis en oeuvre les fermentations après saturation du milieu avec de l'air avec agitation permanente dans des conditions isothermes (en général à 24°C).

On a effectué une addition de 300 mg/l de $(NH_4)_2HPO_4$ (63 mgN/l) correspondant à la quantité maximale autorisée par la législation française.

Le contrôle de la fermentation va à présent être décrit.

Les méthodes analytiques suivantes ont été utilisées.

En ce qui concerne la biomasse, le comptage des cellules a été déterminé en utilisant un compteur électronique de particules (compteur SBI). La viabilité des cellules a été mesurée avec une méthode épifluorescente telle que celle décrite dans l'article de KING, SCHISLER et RUOCCO paru dans la revue Am. Soc. Brew. Chem., 39, 1981, pp. 52-54.

Le $CO_2$ dégagé a été déterminé par mesure automatique de la perte de poids du dispositif de fermentation toutes les 20 minutes, par l'intermédiaire du dispositif décrit dans le brevet EP-027 1380 auquel il a été fait référence précédemment.

En ce qui concerne le sucre, la concentration initiale (So) et finale en sucre a été mesurée en utilisant un réactif dinitrosalicylique, comme cela a, par exemple, été décrit dans l'article de G.L. MILLER paru dans la revue Anal. Chem., 31, 1959, pp. 426-428. Pendant la fermentation, la concentration en sucre (S) a été estimée à partir du dégagement de $CO_2$ selon la relation décrite par EL HALOUI et al., notamment dans l'article paru dans la revue J. Food Eng., 8, 1988, pp. 17-30. Le développement de la fermentation est exprimé sous la forme 1-S/So.

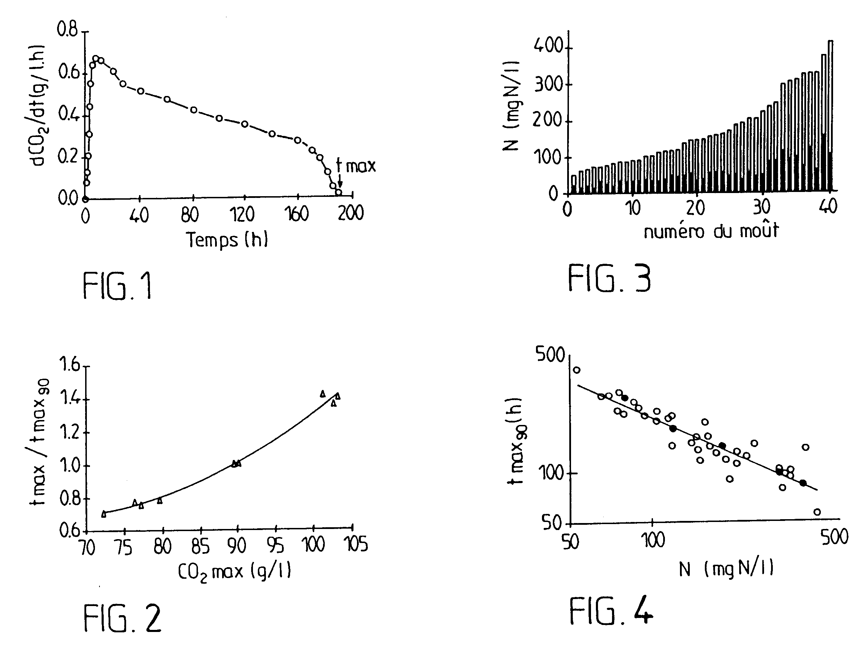

Les paramètres de la cinétique considérés sont la vitesse de production de $CO_2$ ($dCO_2/dt$) et la durée de fermentation. La Figure 1 montre la méthode de détermination du temps de fermentation à partir de la courbe de vitesse de production de $CO_2$. La vitesse de production de $CO_2$ a été calculée par lissage polynomial des dernières mesures de $CO_2$. Les divers dégagements de $CO_2$ et la précision de la pesée (0,1 ou 0,001 g) ont permis le calcul de la vitesse de production de $CO_2$ avec une bonne précision. Cette méthode de contrôle du processus de fermentation alcoolique au laboratoire reproduit de façon satisfaisante la cinétique de fermentation de la fabrication du vin à l'échelle industrielle (dans ce dernier cas, le $CO_2$ dégagé est mesuré par une détermination volumétrique automatique).

On a obtenu une valeur brute de la durée de fermentation (tmax) à l'intersection du taux de production de $CO_2$ et de l'axe des temps (Figure 1). On a vérifié que la concentration en sucre à ce point est toujours inférieure à 2 g/l. La variation de la concentration initiale en sucre a nécessité une correction en utilisant un facteur déterminé à partir d'une expérience précédente de différentes concentrations initiales en sucre et de durée de fermentation respective. Les valeurs corrigées correspondent à une concentration de $CO_2$ dégagé de 90 g/l ($tmax_{90}$). L'équation de la courbe de $tmax/tmax_{90}$ en fonction de $CO_2max$, représentée à la Figure 2, est la suivante :

$$tmax/tmax_{90} = 4,71 \cdot 10^{-4} (CO_2max)^2 - 5,96 \cdot 10^{-2} \cdot CO_2max + 2,56$$

(coefficient de corrélation = 0,995).

Pour la détermination de l'azote assimilable, l'azote ammoniacal et l'azote alpha aminé (acides aminés sans proline) ont été considérés comme étant de l'azote assimilable. Leurs concentrations sont déterminées respectivement par un essai enzymatique et par la méthode T.N.B.S. En ce qui concerne l'essai enzymatique, on peut notamment se référer à l'article de BERGMEYER et BENTLER paru dans la revue Ammonia. 8, p. 454-462, 3rd Edition, VCH, Weinheim (1985) et en ce qui concerne la méthode T.N.B.S. à l'article de CROWELL, OUGH et BAKALINSKY paru dans la revue Am. J. Enol. and Vitic., 36 (2), pp. 175-177, (1985).

Les mesures effectuées ont montré l'importance de l'azote assimilable dans la variation de la cinétique de fermentation.

Tout d'abord, la Figure 3 montre la grande variation de la teneur en azote assimilable parmi les 40 moûts. Cette concentration a varié de 53 à 411 mgN/l (valeur moyenne : 175). La teneur en azote assimilable correspondait à des concentrations d'azote ammoniacal de 17 à 156 mgN/l (valeur moyenne : 55) et d'azote alpha aminé libre de 28 à 305 mgN/l (valeur moyenne : 120).

La corrélation entre la teneur en azote assimilable et les paramètres de la cinétique a été mise en évidence par les résultats suivants.

En ce qui concerne la durée de fermentation, la Figure 4 illustre une relation entre la durée de la fermentation et la teneur en azote assimilable des moûts. L'équation de la courbe $tmax_{90}$ en fonction de N (concentration d'azote assimilable), représentée à la Figure 4, est la suivante :

$$\log tmax_{90} = -0,739 \log N + 3,8 \text{ (coefficient de corrélation = 0,931).}$$

Elle confirme que ce facteur est d'une importance considérable pour la cinétique de fermentation. En outre, le milieu synthétique et les valeurs des moûts sont entremêlés parmi les valeurs. Cette observation suggère que :

- la composition de milieu synthétique simule de façon satisfaisante la composition nutritive d'un jus de fruit standard ;
- la somme d'azote ammoniacal et alpha-aminé est une bonne définition de l'azote assimilable.

En ce qui concerne la vitesse maximale de production de $CO_2$, la Figure 5 montre que la teneur en azote est également fonction de la vitesse maximale de production de $CO_2$. L'équation de la courbe de $(dCO_2/dt)max$ en fonction de N est la suivante :

$$\log (dCO_2/dt)max = 0,843 \log N - 1,72$$

(coefficient de corrélation = 0,965).

La concentration en azote des moûts influence la croissance des cellules. Cependant, la concentration en azote et la population maximale des cellules sont moins bien corrélées, comme cela est illustré à la Figure 6a. L'équation de la courbe Xmax en fonction de N, représentée à la Figure 6a, est la suivante :

$$\log Xmax = 0,553 \log N + 0,817$$

(coefficient de corrélation = 0,811).

Ceci suggère que d'autres agents nutritifs (facteurs de croissance anaérobie, vitamines, ...) ont un effet plus important sur la population des cellules que sur les paramètres tels que la durée de fermentation et la vitesse maximale de production de $CO_2$. Ceci est confirmé par une corrélation améliorée pour le déroulement des fermentations dans le milieu synthétique (dans lequel seulement la teneur en azote varie) illustrée par la Figure 6b. L'équation de la courbe Xmax en fonction de N, représentée à la Figure 6b, est la suivante :

$$\log Xmax = 0,836 \log N + 0,224$$

(coefficient de corrélation = 0,989).

La concentration en azote assimilable a un très faible effet sur la vitesse de production spécifique maximale de $CO_2$ [$1/x$ $(dCO_2/dt)max$] comme cela est mis en évidence par la faible variation de ce paramètre (0,026-0,035 $g/10^9$.h), la faible valeur de la pente (0,07) et le coefficient de corrélation (0,337), illustrées par la Figure 7. L'équation de la courbe $1/x$ $(dCO_2/dt)_{max}$ en fonction de N, illustrée à la Figure 7, est la suivante :

$$\log 1/x(dCO_2/dt)max = 0,07 \log N - 1,66$$

(coefficient de corrélation = 0,337).

Cependant, avec des quantités initiales d'azote supérieures, cette activité diminue plus lentement, comme illustré par la Figure 8. Ceci a été établi précédemment en utilisant un milieu synthétique, on peut notamment se référer à l'article de M.C. BEZENGER et J.M. NAVARRO, précédemment cité.

Il apparaît donc que les mesures effectuées sur les 40 moûts, qui présentent une grande variation de la teneur en azote assimilable, ont montré que la durée de la fermentation et la vitesse maximale de production de $CO_2$ étaient fonction de la teneur en azote assimilable.

Ces résultats ont permis de proposer un procédé de contrôle automatique des additions d'azote assimilable.

Le contrôle de la fermentation alcoolique est possible en utilisant une mesure en ligne de sa cinétique. Une application d'une telle méthode pour le contrôle de la température a déjà été prouvée, même à l'échelle industrielle. On peut notamment se référer à l'article de SABLAY-ROLLES et BARRE paru dans la revue Science des Aliments, 9, 239-51, (1989) et à l'article de EL HALOUI, CLERAN, SABLAY-ROLLES, GRENIER, BARRE et CORRIEU, paru dans la Rev. Fr. Oen., 115, 12-17 (1988).

La concentration initiale en azote assimilable est un autre facteur important affectant la cinétique de fermentation. Par conséquent, un moyen de contrôle automatique des additions d'azote peut être considéré. La mise en oeuvre d'une telle procédure nécessite :

- une méthode pour la détection des carences d'azote ;
- une étude pour déterminer l'efficacité des additions d'azote sur la cinétique de fermentation.

La relation entre (dCO$_2$/dt)max et l'azote assimilable qui a été mise en évidence précédemment, notamment au regard de la Figure 5, est une façon efficace de détecter les carences. En fait, cette valeur qui est également en corrélation avec la durée de fermentation :

- est automatiquement calculée avec une bonne précision et reproductibilité ;
- et est une indication précoce (toujours disponible pendant le premier tiers du déroulement de la fermentation).

On constate qu'entre 50 et 500 mgN/l, plus la concentration en azote assimilable initiale est importante, plus la valeur de (dCO$_2$/dt)max est élevée (Figure 5). Cependant, si on trace la courbe l/(dCO$_2$/dt)max en fonction de la teneur en azote, comme illustré sur la Figure 9, on peut distinguer plusieurs phases :

- phase 1 : l'effet de la teneur en azote assimilable est très important ;
- phase 2 : cet effet est important ;
- phase 3 : cet effet est faible.

Pour des applications industrielles (avec une mesure automatique du volume de CO$_2$), le seuil de carence d'azote peut être considéré comme étant la limite entre les phases 2 et 3.

Dans le cadre des essais qui ont été effectués, ce point correspond à une concentration en azote d'environ 150 mlgN/l. Ce résultat est compatible avec les observations précédentes d'Agenbach (cf. l'article paru dans Proceedings of South African Society for Enology and Viticulture, Cape Town, pp. 68-87, 1977) et Reed et al. (cf. l'article paru dans la revue Yeast Technology, The AVCI Publishing Co., Westport, Connecticut, 1973) en ce qu'un minimum de 120 à 130 mgN/l est nécessaire pour terminer la fermentation. Si l'on se reporte à la Figure 5, cette concentration correspond à une vitesse maximale de production de CO$_2$ de 1,3 g/l .h.

Certaines expériences précédentes effectuées sur 17 moûts à diverses températures entre 14 et 29°C ont montré qu'il existe une corrélation entre la vitesse maximale de production de CO$_2$ [(dCO$_2$/dt)max] et la température. Ces données sont rapportées sur la Figure 10 et permettent la correction de (dCO$_2$/dt)max :

$$(dCO_2/dt)max\theta/dCO_2/dt)max_{24°C} = 1,32.10^{-3}.\theta^2 + 9,8710^{-3}\theta - 7,81.10^{-3} \tag{1}$$

(coefficient de corrélation : 0,983).

Pour (dCO$_2$/dt)max$_{24°C}$ = 1,3 g/lh, la nouvelle relation est :

$$(dCO_2/dt)max\theta_d = 1,72.10^{-3}.\theta^2 + 1,28,10^{-2}\theta - 1,02.10^{-2}. \tag{2}$$

Ainsi, en utilisant cette équation (2), pour une température de fermentation donnée ($\theta$), il est possible d'estimer une carence en azote (quand la valeur observée (dCO$_2$/dt)max est inférieure à (dCO$_2$/dt)max$\theta_d$).

Ainsi, le procédé selon l'invention consiste tout d'abord à mesurer la vitesse maximale de fermentation exprimée en terme de dégagement maximum de CO$_2$ par unité de temps et par unité de volume [-(dCO$_2$/dt)max]. Lorsqu'elle est inférieure à une valeur seuil déterminée, elle révèle une carence en azote pouvant entraîner des risques fermentaires.

Les résultats obtenus par le suivi cinétique et la détermination analytique de 40 moûts de raisin très différents, d'origine très diverses, ont permis d'établir une valeur seuil de 1,3 g/l/h à 24°C qui correspond à une concentration initiale en azote assimilable voisine de 150 mg/l. Bien que cette valeur ait été obtenue à partir d'un échantillonnage de moûts relativement large, elle pourra faire l'objet de correction dans le cas de situations oenologiques bien précises.

On peut noter enfin qu'un modèle de correction de cette valeur seuil, en fonction de la température, a été établi [équations (1) et (2)].

Afin d'éprouver l'efficacité des additions d'azote, on a ajouté 300 mg/l de (NH$_4$)$_2$HPO$_4$ (63 mg N/l) correspondant à la quantité maximale autorisée selon la législation française.

On a tout d'abord étudié l'influence de l'instant de l'addition sur la durée de la fermentation et le taux de fermentation.

Les résultats de cette étude ont été résumés dans les Tableaux 1 et 2, le Tableau 2 se décomposant en les Tableaux 2a, 2b et 2c.

EP 0 469 998 B1

## TABLEAU 1

Influence de l'instant de l'addition d'azote sur la durée de fermentation dans le milieu synthétique (teneur en azote initiale = 120 mg N/l) à 24°C.

| Expérience n° | 1 | 2 | 3 | 4 * | 5 | 6 | 7 | 8 | 9 | 10 | 11 | 12 |
|---|---|---|---|---|---|---|---|---|---|---|---|---|
| Déroulement de la fermentation $(1-S/S_O)$ au moment de l'addition | - | 0.09 0.34 0.57 | 0 | 0.07 | 0.13 | 0.19 | 0.24 | 0.32 | 0.39 | 0.46 | 0.6 | 0.74 |
| Durée de la fermentation (h) | 175 | 137 | 139 | 139 | 143 | 140 | 137 | 140 | 142 | 142 | 153 | 162 |

Essai 1 :          Fermentation témoin (pas d'addition).
Essai 2 :          3 additions (0,1 g/l) de $(NH_4)_2HPO_4$.
Essais 3 -12 :     1 addition (0,3 g/l) de $(NH_4)_2HPO_4$
* correspond à $(dCO_2/dt)max$ de la fermentation témoin.

TABLEAU 2

Influence de l'instant de l'addition d'azote (0,3 g/l) $(NH_4)_2HPO_4$ sur la durée de fermentation dans le milieu synthétique :
(a) correspond a $(dCO_2/dt)$ max de la fermentation témoin.

8

(b) correspond à une valeur d'avancement de fermentation (I-S/So) de 0,4.

TABLEAU 2a

Températures différentes (milieu synthétique avec une teneur en azote initiale de 120 mg N/l).

| Température (°C) | Durée de fermentation (h) | | |
|---|---|---|---|
| | Pas d'addition | Instant de l'addition a | b |
| 17° C | 330 | 260 | 260 |
| 24°C | 175 | 143 | 142 |
| 34°C | 130 | 90 | 93 |

TABLEAU 2b

Différentes concentrations initiales d'azote (milieu synthétique). Température 24°C.

| Teneur en azote (°C) (mg N/l) | Durée de fermentation (h) | | |
|---|---|---|---|
| | Pas d'addition | Instant de l'addition a | b |
| 80 | 275 | 202 | 200 |
| 120 | 175 | 143 | 142 |
| 300 | 97 | 82 | 82 |

TABLEAU 2C

Différents moûts ; Température 24°C.

| Moût n° | | 3 | 5 | 7 | 12 | 18 | 19 | 28 | 34 | 37 |
|---|---|---|---|---|---|---|---|---|---|---|
| Azote assimilable (mgN/l) | | 69.5 | 76 | 86 | 104 | 141 | 146 | 207 | 307 | 374 |
| Durée de la fermentation (h) | pas d'addition | 300 | 211 | 278 | 196 | 172 | 128 | 94 | 93 | 130 |
| | addition (a) | 212 | 205 | 234 | 156 | 140 | 107 | 79 | 88 | 130 |
| | addition (b) | 211 | 187 | 193 | 155 | 140 | 103 | 79 | 88 | 130 |

Le Tableau 1 résume les durées de fermentation observées à 24°C en utilisant un milieu synthétique (teneur en azote assimilable initiale de 120 mg N/l) pour des additions faites à différents moments pendant la fermentation. L'efficacité de ces additions est la même quel que soit le nombre d'additions quand celles-ci sont réalisées avant la moitié de la fermentation. Cette observation a été vérifiée pour différentes températures de fermentation et différentes concentrations initiales en azote (Tableaux 2a et 2b). Une addition précoce, même dans les moûts (Tableau 2c), n'est jamais de manière significative plus efficace.

L'addition pendant la seconde moitié de la fermentation conduit à une fermentation plus longue que celle des échantillons à addition précoce mais l'addition d'azote est encore efficace.

Quel que soit l'instant de la fermentation auquel est effectuée l'addition, on observe une augmentation de la vitesse de fermentation, comme cela est illustré sur la Figure 11a. Ce phénomène est toujours observé dans l'heure suivant l'addition. Plus l'addition est précoce, plus l'augmentation subséquente de la vitesse de production de $CO_2$ est importante. Cependant, le pourcentage de l'augmentation reste constant : la vitesse de fermentation instantanée est accrue d'un facteur de 1,85 comme cela est illustré sur la Figure 11b. Cette observation a des conséquences techniques. En fait, l'augmentation d'énergie nécessaire pour maintenir une fermentation isotherme est proportionnelle à l'augmentation de la vitesse de production de $CO_2$. Par conséquent, une addition précoce d'azote a l'inconvénient d'augmenter considérablement la demande maximale en énergie instantanée du système. Si l'on considère seulement les paramètres suivants, durée de fermentation et énergie nécessaires pour la régulation de température, le meilleur moment pour l'addition d'azote est proche du point médian de la fermentation (par rapport au déroulement de la fermentation 1-S/So).

Une addition modifie également la cinétique à la fin de la fermentation, notamment dans le cas d'une fermentation lente (caractérisée par une diminution lente de la vitesse) comme cela est illustré sur la Figure 12.

On peut également constater que les additions d'azote ont une influence sur la croissance de la population des cellules.

L'instant auquel les additions d'azote sont effectuées affecte la croissance de la population des cellules. Les additions d'azote réalisées pendant la période de croissance de la population des cellules a entraîné des populations les plus élevées. On peut se référer à la Figure 13. L'addition effectuée plus tard dans le temps (pendant la phase stationnaire) a diminué les effets sur le taux de population de cellules comme cela avait déjà été indiqué, notamment dans l'article de SALMON paru dans la revue Appl. Environ. Microbiol. 55, 953-958 (1989).

On a aussi étudié l'influence de la teneur initiale en azote.

L'addition d'azote réalisée au point médian de la fermentation a un effet sur la durée de fermentation pour la grande majorité des moûts mais son efficacité est évidemment fonction de la concentration d'azote initiale ainsi que le montre la Figure 14a. Quand cette concentration initiale est faible, l'addition des sels d'ammonium réduit considérablement la durée de la fermentation (jusqu'à 120 h). D'un autre côté, quand la teneur initiale a dépassé 300 mg N/l, il n'y a pas d'effet significatif. A une concentration initiale de 130 mg N/l, on a noté une modification de la pente. Cette valeur est proche de celle proposée comme le seuil de carence d'azote (150 mg N/l).

L'efficacité de l'addition d'azote est également reliée à la vitesse maximale de production de $CO_2$ comme illustré par la Figure 14b (une modification de la pente à 1,2 g/l.h qui correspond à environ 130 mg N/l). Ainsi, la mesure précoce de ce paramètre cinétique non seulement donne des informations sur la teneur en azote et la durée de la fermentation mais permet aussi une estimation de l'efficacité d'une addition. Ces résultats ont été vérifiés pour des fermentations en présence d'inhibiteurs exogènes (dioxyde de soufre et différents composants fongicides de la vigne : folpel, captane, dichlofluanide, mancozebe, ...)

Ainsi, on a étudié l'action d'une addition d'azote, effectuée de façon à corriger la teneur en azote d'un moût lorsque celle-ci est trop faible pour éviter tout risque fermentaire.

On peut, à ce propos, noter que les composés apportant l'azote assimilable doivent être des additifs admis en oenologie mais ne sont pas limités aux seuls sels d'ammonium.

Comme indiqué précédemment, la carence en azote est détectée par le biais de la valeur maximale du dégagement de $CO_2$ [$(dCO_2/dt)_{max}$], lorsque celle-ci est inférieure à une valeur seuil déterminée.

Cette étude a montré qu'une addition d'azote conservait la même efficacité pour autant qu'elle soit pratiquée avant la fin de la première moitié de la réaction. Toutefois, l'augmentation de la vitesse instantanée de réaction (donc la demande instantanée en énergie nécessaire au contrôle de la température) décroît au fur et à mesure que l'on s'approche du point médian de la fermentation. Il est donc préférable d'effectuer l'addition correctrice d'azote peu avant la moitié de la réaction, les méthodes de suivi automatique décrites dans la demande de brevet EP-0.271.380 permettent également de la déterminer.

Le procédé selon l'invention permet donc de révéler de manière automatique et cuve par cuve, les situations où une addition d'azote, notamment sous forme de sels d'ammonium est nécessaire à la fiabilité de la fermentation et d'en fixer le moment optimal pour l'addition correctrice.

EP 0 469 998 B1

**Revendications**

1. Procédé de contrôle automatique de la fermentation dans un moût de raisins, caractérisé en ce qu'il consiste à :
   - mesurer de façon permanente la vitesse de fermentation et déterminer sa valeur maximale,
   - déterminer une valeur limite de la vitesse maximale de fermentation,
   - effectuer, lorsque la vitesse maximale de fermentation est inférieure à ladite valeur limite, et avant la fin de la première moitié de la réaction de fermentation, une addition d'une substance azotée assimilable.

2. Procédé selon la revendication 1, caractérisé en ce que la vitesse de fermentation est mesurée par la quantité de gaz carbonique dégagée par unité de temps et par unité de volume.

3. Procédé selon la revendication 2, caractérisé en ce que la valeur limite de la vitesse maximale de fermentation correspond à une valeur seuil de la quantité maximum de gaz carbonique dégagée par unité de temps et par unité de volume.

4. Procédé selon la revendication 3, caractérisé en ce que ladite valeur seuil est environ 1,3 g/l/h à 24°C correspondant à une concentration initiale en azote assimilable dudit moût voisine de 150 mg/l.

5. Procédé selon l'une des revendications 1 à 4, caractérisé en ce que ladite addition d'une substance azotée assimilable est effectuée à un moment proche de la fin de la première moitié de la fermentation.

6. Procédé selon l'une des revendications 1 à 5, caractérisé en ce que ladite substance azotée assimilable est un sel d'ammonium, par exemple le sulfate et/ou le phosphate d'ammonium.

**Claims**

1. Method for the automatic control of fermentation in grape must, characterized in that it comprises :
   - continuous measurement of the speed of fermentation and determination of its maximum value,
   - determination of a limiting value of the maximum fermentation speed,
   - addition of an assimilable nitrogen-containing substance when the maximum fermentation speed is lower than said limiting value and before the end of the first half of the fermentation reaction.

2. Method according to claim 1, characterized in that the fermentation speed is measured by the quantity of carbon dioxide gas evolved per unit time and by unit volume.

3. Method according to claim 2, characterized in that the limiting value of the maximum fermentation speed corresponds to a threshold value of the maximum quantity of carbon dioxide gas evolved per unit time and per unit volume.

4. Method according to claim 3, characterized in that said threshold value is about 1.3 g/l/h at 24°C corresponding to an initial concentration in said must of assimilable nitrogen of close to 150 mg/l.

5. Method according to one of claims 1 to 4, characterized in that said addition of an assimilable nitrogen-containing substance is carried out at a time close to the end of the first half of the fermentation.

6. Method according to one of claims 1 to 5, characterized in that said assimilable nitrogen-containing substance is an ammonium salt, for example ammonium sulfate and/or phosphate.

**Patentansprüche**

1. Verfahren zur automatischen Steuerung der Gärung in einem Traubenmost, dadurch gekennzeichnet, daß es umfaßt:
   - ständiges Messen der Gärungsgeschwindigkeit und Bestimmen ihres maximalen Wertes,
   - Bestimmen eines Grenzwerts der maximalen Gärungsgeschwindigkeit,
   - wenn die maximale Gärungsgeschwindigkeit unter dem Grenzwert liegt, und vor dem Ende der ersten Hälfte der Gärungsreaktion, Zugabe einer assimilierbaren stickstoffhaltigen Substanz.

11

**2.** Verfahren gemäß Anspruch 1, dadurch gekennzeichnet, daß die Gärungsgeschwindigkeit anhand der Menge an Kohlendioxid gemessen wird, die pro Zeiteinheit und pro Volumeneinheit freigesetzt wird.

**3.** Verfahren gemäß Anspruch 2, dadurch gekennzeichnet, daß der Grenzwert der maximalen Gärungsgeschwindigkeit einem Schwellenwert der maximalen Menge an Kohlendioxid entspricht, die pro Zeiteinheit und pro Volumeneinheit freigesetzt wird.

**4.** Verfahren gemäß Anspruch 3, dadurch gekennzeichnet, daß der Schwellenwert bei 24°C ungefähr 1,3 g/l/h beträgt, was einer Anfangskonzentration des Mosts an assimilierbarem Stickstoff in der Nähe von 150 mg/l entspricht.

**5.** Verfahren gemäß einem der Ansprüche 1 bis 4, dadurch gekennzeichnet, daß die Zugabe einer assimilierbaren stickstoffhaltigen Substanz zu einem Zeitpunkt nahe dem Ende der ersten Hälfte der Gärung erfolgt.

**6.** Verfahren gemäß einem der Ansprüche 1 bis 5, dadurch gekennzeichnet, daß die assimilierbare stickstoffhaltige Substanz ein Ammoniumsalz ist, zum Beispiel Ammoniumsulfat und/oder -phosphat.

FIG. 1

FIG. 3

FIG. 2

FIG. 4

EP 0 469 998 B1

FIG. 6a

FIG. 6b

FIG. 5

FIG. 7

14

FIG.8

FIG.9

FIG. 10

FIG. 12

FIG. 13

FIG. 11a

FIG. 11b

FIG. 14 b

FIG. 14 a